# EUROPEAN PATENT SPECIFICATION

(11) **EP 4 159 298 B1**
(45) Date of publication and mention of the grant of the patent: **07.05.2025**
(21) Application number: 21812133.3
(22) Date of filing: 11.03.2021
(51) Int. Cl.: B01D 45/14, B04B 5/12

(54) **SEPARATION DEVICE AND SEPARATION SYSTEM**
TRENNVORRICHTUNG UND TRENNSYSTEM
DISPOSITIF ET SYSTÈME DE SÉPARATION

(30) Priority: 28.05.2020 JP 2020093722
(43) Date of publication of application: 05.04.2023
(73) Proprietor: Panasonic Intellectual Property Management Co., Ltd., Osaka-shi, Osaka 540-6207 (JP)
(72) Inventor: KAMAKURA, Masanao, Osaka-shi, Osaka 540-6207 (JP); HAYASAKI, Yoshiki, Osaka-shi, Osaka 540-6207 (JP); TSURUI, Shota, Osaka-shi, Osaka 540-6207 (JP)
(74) Representative: SSM Sandmair
(86) International application number: PCT/JP2021/009816
(87) International publication number: WO 2021/240950

(56) References cited:
- EP-A1- 4 049 739
- WO-A1-2016/163075
- WO-A1-2016/163075
- JP-A- 2017 094 232
- JP-A- H11 512 343
- JP-U- S6 133 650
- JP-U- S6 133 650
- US-A- 5 149 345

## Description

### Technical Field

The present disclosure relates to separation devices and separation systems, and specifically, to a separation device for separating solid substances contained in a gas from the gas and a separation system including the separation device.

### Background Art

Conventionally, known as a separation device is a centrifuge including a chamber having a cylindrical confinement wall and a driving rotor having a plurality of blades fixed to a shaft (Patent Literature 1).

The cylindrical confinement wall surrounds the shaft and is disposed coaxially with the shaft. Each blade is disposed between the shaft and the cylindrical confinement wall and is coupled to the shaft. Here, the cylindrical confinement wall has an inlet opening (inlet), and an outlet opening (outlet), and a removal opening (discharge port). The removal opening is located closer to the outlet opening than to the inlet opening.
WO 2016/163075 A1 discloses a separation device provided with a rotor, a frame, a plurality of partition plates, a plurality of flow paths, and a rotating plate. The rotating plate is circular. The separation device is further provided with: a center exit that is on the downstream side of each of the plurality of flow paths, linked to at least one flow path of the plurality of flow paths, and formed more to the side of a center axis of rotation than the plurality of partition plates; and an outer peripheral exit that is on the downstream side of each of the plurality of flow paths, linked to at least one flow path of the plurality of flow paths, and formed more to the outside than the plurality of partition plates. The rotating plate has a size large enough to cover the plurality of partition plates and a space on the downstream side of each of the plurality of flow paths.
JP S61 33650 U discloses a separation device comprising a cylindrical cyclone case in which rotating swirling blades are arranged.
EP 4 049 739 A1 discloses a separating device including a casing, a rotor, and a blade. The casing has a gas inlet, a gas outlet, and a discharge port for solid substances. The rotor is disposed on an inner side of the casing and is configured to be rotatable around a central axis of rotation of the rotor, the central axis of rotation extending along an axial direction of the casing. The blade is disposed between the casing and the rotor and is configured to rotate together with the rotor. The blade has a first end adjacent to the gas inlet and a second end adjacent to the gas outlet. The casing has a space between the second end of the blade and the discharge port in the axial direction.

### Citation List

### Patent Literature

Patent Literature 1: US 5,149,345 A

### Summary of Invention

Separation devices are desired to be improved in their separative performance of separating solid substances contained in a gas from the gas.

It is an object of the present disclosure to provide a separation device and a separation system which are configured to improve separative performance of separating solid substances contained in a gas from the gas.

The invention is set out in appended claim 1. The dependent claims describe advantageous embodiments.

### Brief Description of Drawings

FIG. 1 is a perspective view of a separation device according to an embodiment;
FIG. 2 is a sectional view of the separation device, wherein an external cover is mounted on the separation device, and a rotation central axis is shown in this sectional view;
FIG. 3 is a cross-section view of the separation device, wherein this cross-section view corresponds to a cross-section surface along line III-III of FIG. 2;
FIG. 4 is a cross-section view of the separation device, wherein this cross-section view corresponds to a cross-section surface along line IV-IV of FIG. 2;
FIG. 5 is a schematic configuration diagram of a separation system including the separation device;
FIG. 6 is a view of a simulation result of pressure distribution inside a casing of the separation device;
FIG. 7 is a view of a simulation result of a trajectory of a particle with the separation device;
FIG. 8 is a view of a simulation result of a trajectory of another particle with the separation device; and
FIG. 9 is a sectional view of a separation device of a first variation of the embodiment, wherein an external cover is mounted on the separation device, and a rotation central axis is shown in this sectional view.

### Description of Embodiments

A separation device and a separation system according to an embodiment will be described below with reference to the drawings. Note that the embodiment to be described below is a mere example of various embodiments of the present disclosure. Rather, the embodiment to be described below may be readily modified in various manners depending on a design choice or any other factor without departing from the scope of the present disclosure. The drawings to be referred to in the following description of the embodiment are all schematic representations. Thus, the ratio of the dimensions (including thicknesses) of respective constituent elements illustrated on the drawings does not always reflect their actual dimensional ratio.

### (1) Overview

The separation device 1 is provided on an upstream side of, for example, an air conditioning facility having an air blowing function and is configured to separate solid substances in air (gas). The separation device 1 is installed on a rooftop of a facility (e.g., a dwelling house) having a flat roof or on ground. The air conditioning facility is, for example, an air blowing device configured to blow air from the upstream side to a downstream side. The air blowing device is, for example, an electric fan. The air conditioning facility is not limited to the air blowing device but may be, for example, a ventilating device, an air conditioner, an air supply cabinet fan, or an air conditioning system including an air blowing device and a heat exchanger. The flow rate of air caused by the air conditioning facility to flow to the separation device 1 is, for example, 50 m³/h to 500 m³/h. The outflow volume of air from the separation device 1 toward the air conditioning facility is substantially equal to the flow rate of air flowing through the air conditioning facility.

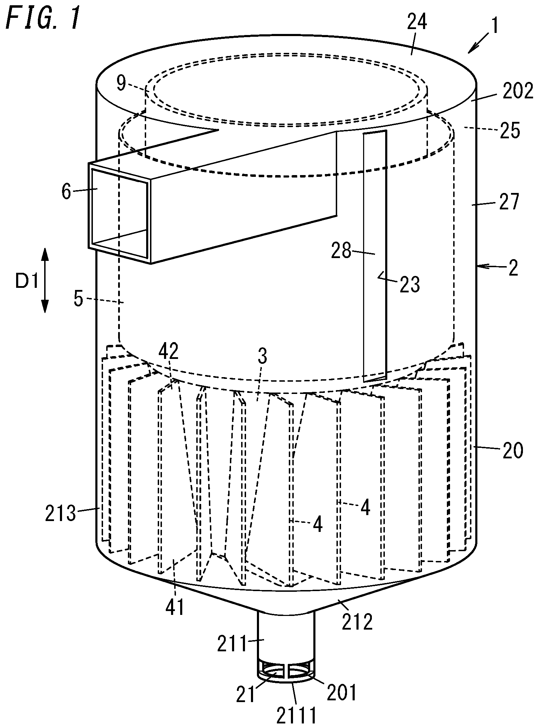

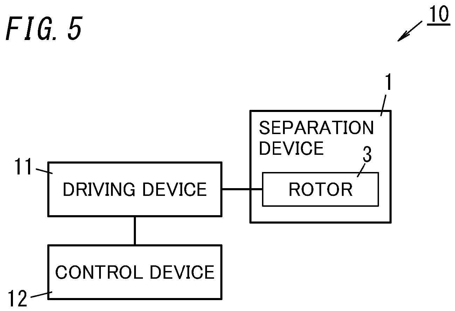

As shown in FIGS. 1 to 4, the separation device 1 includes a casing 2, a rotor 3, and blades 4. Moreover, a separation system 10 includes the separation device 1 and a driving device 11 as shown in FIG. 5.

The casing 2 includes a gas inlet 21, a gas outlet 22, and a solid substance discharge port 23. The rotor 3 is disposed inside the casing 2. The rotor 3 is rotatable around a rotation central axis 30 extending along an axial direction D1 of the casing 2. The blades 4 are disposed between the casing 2 and the rotor 3. The blades 4 rotate together with the rotor 3. Each blade 4 has a first end 41 adjacent to the gas inlet 21 and a second end 42 adjacent to the gas outlet 22. The casing 2 has a space 25 extending to the solid substance discharge port 23 with respect to the second ends 42 of the blades 4 in the axial direction D1 of the casing 2.

The solid substance discharge port 23 is a hole for discharging solid substances contained in, for example, air to an outside of the casing 2. The solid substance discharge port 23 connects an inside space of the casing 2 and an outside space of the casing 2 to each other. In other words, the inside and the outside of the casing 2 are in communicative connection with each other via the solid substance discharge port 23. The separation device 1 generates, in the casing 2, an airflow swirling in the casing 2 when the rotor 3 rotates. In the separation device 1, part of a flow path from the gas inlet 21 toward the gas outlet 22 is formed between the casing 2 and the rotor 3.

The separation device 1 further includes a separating wall 5. The separating wall 5 is disposed in the space 25. The separating wall 5 separates the space 25 into a first region R1 on the inner side and a second region R2 on the outer side when viewed in the axial direction D1 of the casing 2.

The separation device 1 is configured to cause air flowing from the upstream side into the casing 2 to flow to the downstream side while the separation device 1 helically rotates the air around the rotor 3. In the present embodiment, "upstream side" means a side (primary side) from which an arrow representing an air-flowing direction is directed. Moreover, "downstream side" means a side (secondary side) to which the arrow representing the air-flowing direction is directed. The separation device 1 is used, for example, in a posture where the gas outlet 22 is located above the gas inlet 21. In this case, the separation device 1 is configured such that air flowing through the gas inlet 21 formed in the casing 2 into the flow path is caused to helically rotate around the rotor 3 to move to the gas outlet 22.

The separation device 1 has the solid substance discharge port 23 in order to discharge the solid substances contained in the air flowing in the casing 2 to the outside of the casing 2. Thus, at least some of the solid substances contained in the air flowing in the casing 2 through the gas inlet 21 of the casing 2 are discharged to the outside of the casing 2 through the solid substance discharge port 23 in the course of passing through the flow path.

Moreover, the separation system 10 includes the driving device 11 in addition to the separation device 1 as described above. The driving device 11 rotationally drives the rotor 3. That is, the driving device 11 rotates the rotor 3 around the rotation central axis 30. The driving device 11 includes, for example, a motor.

Examples of the solid substances in the air include fine particles and dust. Examples of the fine particles include particulate matter. Examples of the particulate matter include primary particles emitted directly to air as fine particles and secondary particles emitted to the air as a gas and formed into fine particles in the air. Examples of the primary particles include soil particles (e.g., yellow dust), powder dust, vegetal-origin particles (e.g., pollen), animal-origin particles (e.g., spores of mold), and soot. Examples of the particulate matter include PM1.0 and PM2.5 (fine particulate matters), PM10, and SPM (suspended particulate matter) classified based on their sizes. PM1.0 refers to fine particles passing through a sizing device with a collection efficiency of 50% at a particle size of 1.0 µm. PM2.5 refers to fine particles passing through a sizing device with a collection efficiency of 50% at a particle size of 2.5 µm. PM10 refers to fine particles passing through a sizing device with a collection efficiency of 50% at a particle size of 10 µm. SPM refers to fine particles passing through a sizing device with a collection efficiency of 100% at a particle size of 10 µm, and SPM corresponds to PM6.5 to PM7.0 and refers to fine particles slightly smaller than PM10.

### (2) Details

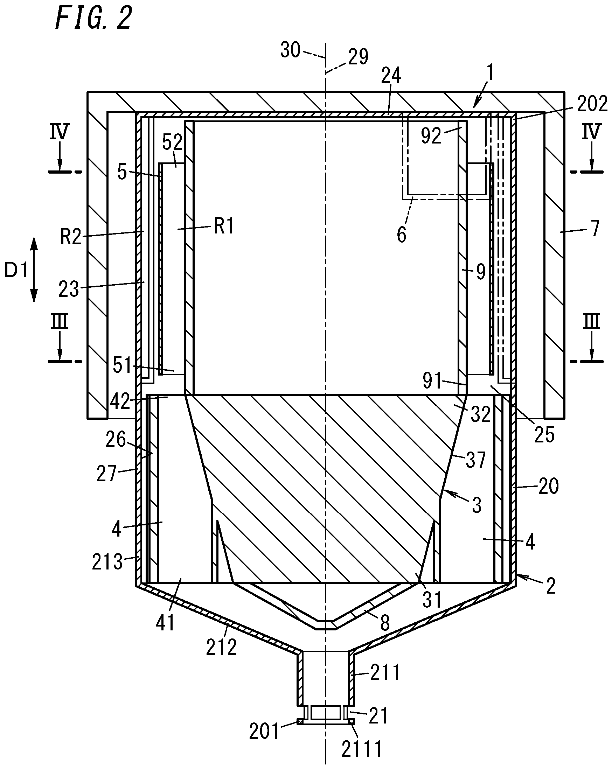

As described above, the separation device 1 includes the casing 2, the rotor 3, the blades 4, and the separating wall 5. As shown in FIGS. 1 and 2, the separation device 1 further includes an outlet tubular part 6, a rectifying structure 8, and a structure 9. Moreover, the separation system 10 includes the separation device 1, the driving device 11, and a control device 12.

A material for the casing 2 is, for example, but is not limited to, metal but may be a resin (e.g., ABS resin). Moreover, the casing 2 may include a metal part made of metal and a resin part made of a resin.

The casing 2 includes: a tubular part 20 having a first end 201 and second end 202; and a bottom part 24 which closes an opening of the second end 202 of the tubular part 20. In the separation device 1 according to the embodiment, the casing 2 has a bottomed tubular shape. The axial direction D1 of the casing 2 is a direction along the central axis of the tubular part 20.

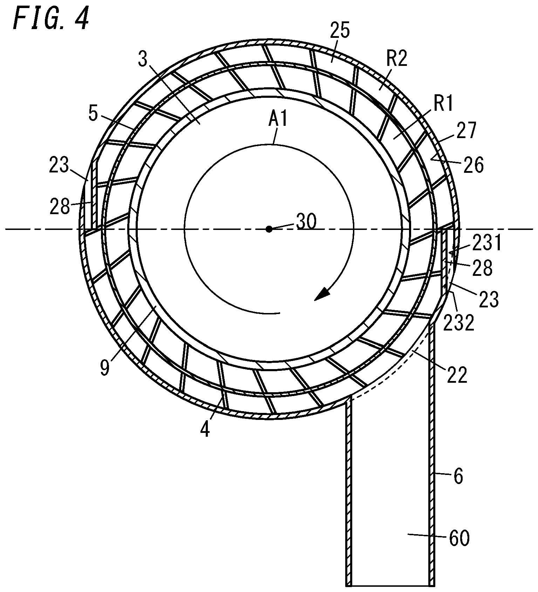

The tubular part 20 has a small diameter portion 211, an expanding diameter portion 212, and a large diameter portion 213. In the tubular part 20, the small diameter portion 211, the expanding diameter portion 212, and the large diameter portion 213 are arranged in this order in the axial direction D1 of the casing 2. In the tubular part 20, the small diameter portion 211 has the gas inlet 21. The large diameter portion 213 has the gas outlet 22 and the solid substance discharge port 23. The gas inlet 21, the gas outlet 22, and the solid substance discharge port 23 are open at lateral sides of the casing 2. In the axial direction D1 of the casing 2, the gas inlet 21, the solid substance discharge port 23, and the gas outlet 22 are arranged in this order. On one plane orthogonal to the axial direction D1 of the casing 2, a part (downstream end) of the solid substance discharge port 23 overlaps the gas outlet 22 (see FIG. 4).

The small diameter portion 211 has the gas inlet 21. The small diameter portion 211 is in the shape of a cylinder having both bottom surfaces which are open. The gas inlet 21 is formed in a side surface of the small diameter portion 211. The gas inlet 21 is formed in the small diameter portion 211 near a bottom part 2111 of the small diameter portion 211.

The casing 2 includes a plurality of gas inlets 21. Each gas inlet 21 is substantially 1/4 arc shape.

The large diameter portion 213 is in the shape of a cylinder having both ends which are open. The large diameter portion 213 surrounds the rotor 3. In the axial direction D1 of the casing 2 (axial direction of the large diameter portion 213), the length of the large diameter portion 213 is longer than the length of the rotor 3. The inner diameter and the outer diameter of the large diameter portion 213 are uniform over the entire axial length of the large diameter portion 213. The outer diameter and the inner diameter of the large diameter portion 213 are respectively larger than the outer diameter and the inner diameter of the small diameter portion 211.

The solid substance discharge port 23 is formed in an outer peripheral surface 27 of the casing 2 (here, an outer peripheral surface of the large diameter portion 213). The solid substance discharge port 23 is formed as a slit extending along the axial direction of the large diameter portion 213 (axial direction D1 of the casing 2). The solid substance discharge port 23 is formed in a portion of the large diameter portion 213, the portion corresponding to the space 25.

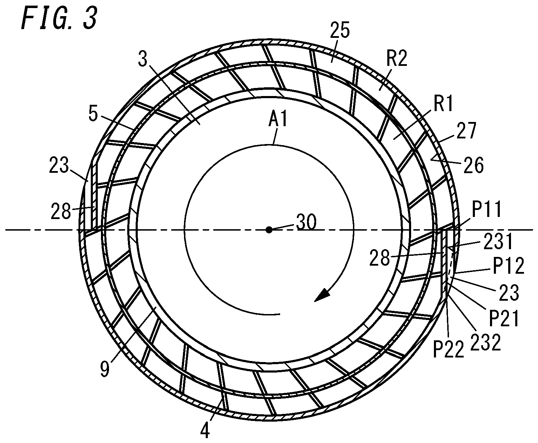

The solid substance discharge port 23 is apart from the gas inlet 21 in the axial direction D1 of the casing 2 and is in communicative connection with the inside and outside of the tubular part 20 (large diameter portion 213) between the first end 201 and the second end 202 of the tubular part 20. The solid substance discharge port 23 extends in a direction along one tangential direction of an inner peripheral surface 26 of the casing 2 (an inner peripheral surface of the large diameter portion 213) when viewed in the axial direction D1 of the casing 2. Here, the one tangential direction is a direction along a rotation direction A1 (see FIGS. 3 and 4) of the rotor 3.

More specifically, the inner surface of the solid substance discharge port 23 has, as shown in FIGS. 3 and 4, an inner front surface 232 located frontward and an inner rear surface 231 located rearward in a direction along the rotation direction A1 of the rotor 3.

The inner rear surface 231 is connected to the inner peripheral surface 26 of the casing 2 (the inner peripheral surface of the large diameter portion 213). The inner rear surface 231 has an outer end P12 away from the rotor 3 and an inner end P11 near to the rotor 3. The outer end P12 is located frontward of the inner end P11 in the rotation direction A1. In a cross-section orthogonal to the axial direction D1 of the casing 2, the inner rear surface 231 extends in a tangential direction of the inner peripheral surface 26 at the inner end P11 of the inner rear surface 231.

The inner front surface 232 has an outer end P22 away from the rotor 3 and an inner end P21 near to the rotor 3. The outer end P22 is located frontward of the inner end P21 in the rotation direction A1. In short, in the separation device 1, the solid substance discharge port 23 in the casing 2 has the inner rear surface 231 and the inner front surface 232 respectively located rearward and frontward in the rotational direction A1 of the rotor 3. In a cross-section orthogonal to the axial direction D1 of the casing 2, the inner front surface 232 is substantially parallel to the inner rear surface 231.

The casing 2 (large diameter portion 213) has a plurality of (in the illustrated example, two) solid substance discharge ports 23. The two solid substance discharge ports 23 are on opposite sides of the outer peripheral surface of the large diameter portion 213. In the separation device 1, solid substances passing in the vicinity of the inner peripheral surface 26 of the casing 2 (here, an inner peripheral surface of the large diameter portion 213) can be discharged through the solid substance discharge ports 23.

The separation device 1 includes a guide wall 28. The guide wall 28 are provided on the casing 2. The separation device 1 includes a plurality of (in the example shown in the figure, two) guide walls 28. The two guide walls 28 correspond to the two solid substance discharge ports 23 on a one-to-one basis.

Each guide wall 28 extends from the inner peripheral surface 26 of the casing 2 inward of the casing 2. One surface of each guide wall 28 is flush with the inner front surface 232 of the solid substance discharge port 23. Each guide wall 28 extends along the inner front surface 232 of the solid substance discharge port 23 from the inner peripheral surface 26 of the casing 2 to one center line of the casing 2 (one center line of the large diameter portion 213; shown by long dashed short dashed line in FIGS. 3 and 4). The one center line is orthogonal to the rotation central axis 30 of the rotor 3 and is orthogonal to the one tangential direction.

The large diameter portion 213 has the gas outlet 22. The gas outlet 22 is formed in a side surface of the large diameter portion 213. The gas outlet 22 is formed near the bottom part 24 of the large diameter portion 213. The gas outlet 22 is apart from the gas inlet 21 in the axial direction D1 of the casing 2 and is in communicative connection with the inside and the outside of the tubular part 20 (large diameter portion 213) between the first end 201 and the second end 202 of the tubular part 20. The gas outlet 22 is adjacent to one solid substance discharge port 23 of the two solid substance discharge ports 23. The gas outlet 22 is located frontward of the solid substance discharge ports 23 adjacent thereto in the rotational direction A1 (see FIGS. 3 and 4) of the rotor 3.

The expanding diameter portion 212 is connected between the small diameter portion 211 and the large diameter portion 213. The expanding diameter portion 212 has a first end adjacent to the small diameter portion 211 and a second end adjacent to the large diameter portion 213. The first end of the expanding diameter portion 212 is connected to the small diameter portion 211. The inner space of the expanding diameter portion 212 is communicated with the inner space of the small diameter portion 211. The second end of the expanding diameter portion 212 is connected to the large diameter portion 213. The inner space of the expanding diameter portion 212 is communicated with the inner space of the large diameter portion 213. The expanding diameter portion 212 has a taper cylindrical shape of which the outer diameter and the inner diameter gradually increase toward the large diameter portion 213 as the distance from the small diameter portion 211 increases in the axial direction D1 of the casing 2. The outer diameter and the inner diameter of the expanding diameter portion 212 at the end adjacent to the small diameter portion 211 in the axial direction D1 of the casing 2 are respectively the same as the outer diameter and the inner diameter of the small diameter portion 211. The outer diameter and the inner diameter of the expanding diameter portion 212 at the end adjacent to the large diameter portion 213 in the axial direction D1 of the casing 2 are respectively the same as the outer diameter and the inner diameter of the large diameter portion 213. That is, the opening area of the expanding diameter portion 212 gradually increases as the distance from the gas inlet 21 increases in the axial direction D1 of the casing 2.

The outlet tubular part 6 is connected to the casing 2. The outlet tubular part 6 is, for example, connected to the gas outlet 22 at the outer peripheral surface 27 of the casing 2 (large diameter portion 213). The outlet tubular part 6 has an inner space 60 that is communicated with the inner space of the tubular part 20 (the inner space of the large diameter portion 213) via the gas outlet 22.

The outlet tubular part 6 is a duct for feeding the gas from which solid substances have been separated to the outside of the casing 2. The outlet tubular part 6 extends, from the outer peripheral surface 27 of the casing 2, in a direction intersecting with each of a radial direction of the casing 2 at a position where the gas outlet 22 is provided and the axial direction D1 of the casing 2, when viewed in the axial direction D1 of the casing 2. The outlet tubular part 6 has a rectangular tubular shape. In the outlet tubular part 6, an opening on an opposite side of the outlet tubular part 6 from the gas outlet 22 has a square shape, but the shape of the opening is not limited to this example.

The rotor 3 is disposed inside the casing 2 coaxially with the casing 2. Saying "disposed coaxially with the casing 2" means that the rotor 3 is disposed such that the rotation central axis 30 (see FIG. 2) of the rotor 3 coincides with the central axis 29 of the casing 2 (central axis of the large diameter portion 213). Examples of a material for the rotor 3 include a polycarbonate resin.

In a direction along the rotation central axis 30 of the rotor 3, the rotor 3 has a length shorter than the length of the large diameter portion 213 in the axial direction D1 of the casing 2.

The rotor 3 has, for example, a circular truncated cone shape. The rotor 3 has a first end 31 adjacent to the gas inlet 21 and a second end 32 adjacent to the gas outlet 22. The rotor 3 has a circular truncated cone shape whose diameter gradually increases from the first end 31 toward the second end 32. The rotor 3 is disposed in the large diameter portion 213 in the vicinity of the expanding diameter portion 212 in the axial direction of the casing 2.

In the separation device 1, a plurality of (here, 24) blades 4 are disposed between the casing 2 and the rotor 3. That is, the separation device 1 includes the plurality of blades 4. In the separation device 1, the plurality of blades 4 are disposed between the casing 2 and the rotor 3. The plurality of blades 4 are connected to (coupled to) the rotor 3 and are apart from the casing 2. The plurality of blades 4 rotate together with the rotor 3.

The plurality of blades 4 are provided to the rotor 3 over the entire length of the rotor 3 in a direction along the axial direction D1 of the casing 2. That is, the plurality of blades 4 are provided from the first end 31 to the second end 32 of the rotor 3. Examples of a material for the plurality of blades 4 include a polycarbonate resin. In the separation device 1, the same material is adopted for the rotor 3 and the plurality of blades 4, but this should not be construed as limiting the disclosure. The material for the rotor 3 and the material for the plurality of blades 4 may be different from each other. The plurality of blades 4 may be formed integrally with the rotor 3, or each of the plurality of blades 4 may be formed as members separated from the rotor 3 and may be fixed to the rotor 3, thereby being connected to the rotor 3.

Each of the plurality of blades 4 is disposed such that a gap is formed between each blade 4 and the casing 2 when viewed in the axial direction D1 of the casing 2. In other words, the separation device 1 has a gap between each of the plurality of blades 4 and the inner peripheral surface 26 of the casing 2. In the radial direction of the rotor 3, the distance between a protruding tip end of each of the plurality of blades 4 and an outer peripheral surface 37 of the rotor 3 is shorter than the distance between the outer peripheral surface 37 of the rotor 3 and the inner peripheral surface 26 of the casing 2.

Each of the plurality of blades 4 is disposed in a space (the flow path) between the outer peripheral surface 37 of the rotor 3 and the inner peripheral surface 26 of the casing 2 to be parallel to the rotation central axis 30 of the rotor 3. Each of the plurality of blades 4 has a flat plate shape. Each of the plurality of blades 4 has a trapezoidal shape having a height in the direction along the rotation central axis 30 of the rotor 3 viewed in a thickness direction defined with respect to each of the plurality of blades 4. Each of the plurality of blades 4 is tilted by a prescribed angle (e.g., 45 degrees) to one radial direction of the rotor 3 when viewed form the second end 202 of the tubular part 20 in the direction along the axial direction D1 of the casing 2. In this embodiment, each of the plurality of blades 4 has a tip end adjacent to the casing 2 and a base end adjoining the rotor 3, and the tip end is located rearward of the base end in the rotation direction A1 (see FIGS. 3 and 4) of the rotor 3 in a protrusion direction from the rotor 3. That is, in the separation device 1, each of the plurality of blades 4 is tilted to the one radial direction of the rotor 3 by the prescribed angle (e.g., 45 degrees) in the rotation direction A1 of the rotor 3. The prescribed angle is not limited to 45 degrees but may be an angle greater than 0 degree and less than or equal to 90 degrees. For example, the prescribed angle may be an angle within a range from 10 degrees to 80 degrees. Each of the plurality of blades 4 is not necessarily tilted with respect to the one radial direction of the rotor 3 by the prescribed angle in the rotation direction A1 of the rotor 3 but may have, for example, an angle of 0 degree with respect to the one radial direction of the rotor 3. That is, the plurality of blades 4 may radially extend from the rotor 3. As illustrated in FIGS. 3 and 4, the plurality of blades 4 are disposed to be apart from each other at equal angular intervals in a circumferential direction of the rotor 3. The "equal angular interval" as used herein is not limited to only the case of a strictly equal angular interval but may be, for example, an angular interval within a prescribed error range (e.g., ±10% of the prescribed angular interval) with respect to a prescribed angular interval.

In the axial direction D1 of the casing 2, the length of each of the plurality of blades 4 is equal to the length of the rotor 3. In this embodiment, the length of each of the plurality of blades 4 is not limited to the case of being equal to the length of the rotor 3 but may be longer or shorter than the length of the rotor 3.

In the axial direction D1 of the casing 2, the length of each of the plurality of blades 4 is shorter than the length of the tubular part 20. In the direction along the rotation central axis 30 of the rotor 3, the length of each of the plurality of blades 4 is shorter than the distance between an end of the large diameter portion 213 at the side of the expanding diameter portion 212 and the solid substance discharge port 23.

Each of the plurality of blades 4 has a first end 41 adjacent to the gas inlet 21 and a second end 42 adjacent to the gas outlet 22 and the solid substance discharge port 23 in the axial direction D1 of the casing 2. The first end 41 of each of the plurality of blades 4 is an end (upstream end) adjacent to the first end 201 of the tubular part 20 in the axial direction D1 of the casing 2. The second end 42 of each of the plurality of blades 4 is an end (downstream end) adjacent to the second end 202 of the tubular part 20 in the axial direction D1 of the casing 2.

The casing 2 has the space 25 extending to the solid substance discharge port 23 with respect to the second end 42 of each blade 4 in the axial direction D1 of the casing 2. In the separation device 1, the solid substance discharge port 23 is at a location where the solid substance discharge port 23 overlaps the space 25 in a direction orthogonal to the rotation central axis 30. That is, the solid substance discharge port 23 is at a location where the solid substance discharge port 23 overlaps the space 25 in the direction orthogonal to the axial direction D1 of the casing 2. Moreover, in the separation device 1, the solid substance discharge port 23 is at a location where the solid substance discharge port 23 does not overlap each blade 4 in the direction orthogonal to the rotation central axis 30. That is, the solid substance discharge port 23 is at a location where the solid substance discharge port 23 does not overlap each blade 4 in the direction orthogonal to the axial direction D1 of the casing 2. In other words, each blade 4 is not in a projection area of the solid substance discharge port 23 when the casing 2 is viewed laterally.

In the separation device 1, the ratio of the length of the space 25 to the sum of the length of each blade 4 and the length of the space 25 in the axial direction D1 of the tubular part 20 is, for example, greater than or equal to 0.2 and less than or equal to 0.8 and is, for example, 0.55.

In the separation device 1, the structure 9 is disposed in the space 25. The structure 9 has, for example, a cylindrical shape. The structure 9 is disposed coaxially with the rotor 3. The structure 9 is connected to the rotor 3. The structure 9 has a first end 91 and a second end 92 in the axial direction. The first end 91 of the structure 9 is connected to the second end 32 of the rotor 3. The second end 32 of the structure 9 is farther away from the rotor 3 than the first end 91 is in the axial direction D1 of the casing 2. The outer diameter of the structure 9 is equal to the outer diameter of the rotor 3 at the second end 32. The structural body 9 may be, for example, apart from the rotor 3 and supported by the casing 2 via one or a plurality of beams. The structure 9 may rotate together with the rotor 3 or may rotate independently of the rotor 3.

In the separation device 1, the space 25 is defined between the casing 2 and the structure 9 at a position between the second end 42 of each blade 4 and the solid substance discharge port 23. In short, the space 25 in the separation device 1 is defined as an area surrounded by the second end 42 of each blade 4, the inner peripheral surface 26 of the casing 2, and an outer peripheral surface of the structural body 9.

The rectifying structure 8 is disposed between the gas inlet 21 and the rotor 3 inside the casing 2 and is configured to rectify a flow of a gas flowing into the casing 2. The rectifying structure 8 has, for example, a circular truncated cone shape and is disposed inside the expanding diameter portion 212. The rectifying structure 8 is disposed such that the central axis of the rectifying structure 8 coincides with the central axis 29 of the casing 2. Thus, in the separation device 1, the gas flowing through the gas inlet 21 into the casing 2 is easily introduced into a location far from the outer peripheral surface 37 of the rotor 3 and close to the inner peripheral surface 26 of the casing 2 in the radial direction of the rotor 3. The rectifying structure 8 may be, for example, supported by the casing 2 via one or more beams or may be coupled to the rotor 3.

As described above, the separation device 1 further includes the separating wall 5 disposed in the space 25. The separating wall 5 has an axis along the axial direction D1 of the casing 2 and has a tubular shape having openings on both sides in the axial direction of the separating wall 5. More specifically, the separating wall 5 has a round tubular shape. The separating wall 5 separates the space 25 into the first region R1 on the inner side and the second region R2 on the outer side when viewed in the axial direction D1 of the casing 2.

In the axial direction D1 of the casing 2, the length of the separating wall 5 is shorter than the length of the space 25. In the axial direction D1 of the casing 2, the length of the separating wall 5 is shorter than the length of the solid substance discharge port 23. The separating wall 5 is at a position where the separating wall 5 overlaps the blades 4 in the axial direction D1 of the casing 2.

The separating wall 5 has a first end 51 adjacent to the gas inlet 21 and a second end 52 adjacent to the gas outlet 22. In the axial direction D1 of the casing 2, a gap (first gap) is provided between the first end 51 of the separating wall 5 and the second end 42 of the blade 4. In the axial direction D1 of the casing 2, a gap (second gap) is provided between the second end 52 of the separating wall 5 and the bottom part 24 of the casing 2. The first region R1 and the second region R2 are in communicative connection with each other via the two gaps (the first gap and the second gap).

The inventors of the present application analyzed the airflow in the casing 2 for each of the separation device 1 of the embodiment and a separation device 1 of a comparative example having the same structure as that of the embodiment except that the separating wall 5 is not provided. The airflow in the casing 2 of each of the separation device 1 and the separation device of the comparative example can be inferred from a result of simulation performed by using, for example, fluid analysis software. As the fluid analysis software, for example, ANSYS(R) Fluent(R) may be adopted.

As the result of the simulation, the inventors of the present application have found that in each of the separation device 1 of the embodiment and the separation device of the comparative example, the velocity vector of the flow velocity of a gas in the space 25 tends to be negative and tends to be positive respectively in a relatively inner region (the first region R1) and in a relatively outer region (the second region R2) in the direction perpendicular to the axial direction D1 of the casing 2, where a direction from the gas inlet 21 toward the gas outlet 22 along the axial direction D1 of the casing 2 is defined as the positive direction. Therefore, in each of the separation device 1 of the embodiment and the separation device of the comparative example, it has been found that when the solid substances (particles) conveyed toward the gas outlet 22 by the airflow directed toward the gas outlet 22 in the relatively outer region are not discharged through the solid substance discharge port 23 before reaching the bottom part 24, the solid substances (particles) conveyed toward the gas outlet 22 may be by the airflow directed toward the gas inlet 21 in the relatively inner region and may return toward the gas inlet 21.

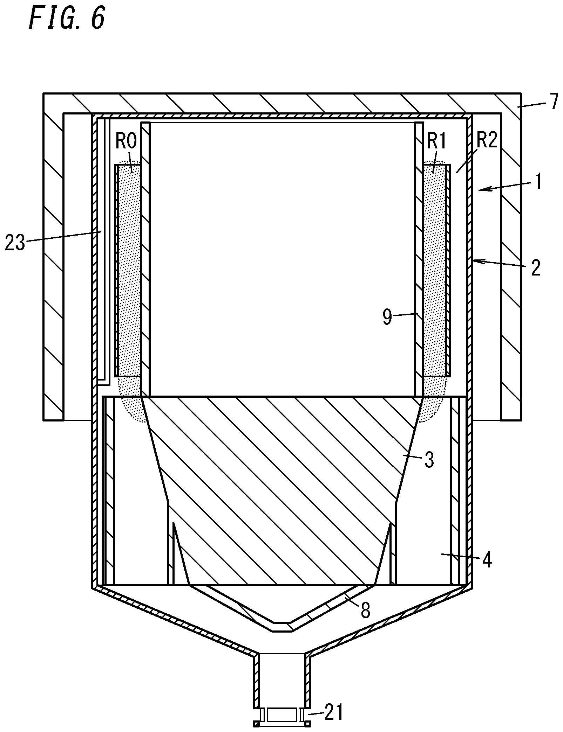

FIG. 6 shows an example of the result of the simulation by using the fluid analysis software for an airflow in the casing 2 of the separation device 1 of the embodiment. In FIG. 6, a region R0 shaded with dots in the space 25 shows a region in which for the velocity vector of the flow velocity of a fluid in the casing 2, the flow velocity is negative, where the direction from the gas inlet 21 toward the gas outlet 22 along the axial direction D1 of the casing 2 is defined as the positive direction. Further, a region not shaded with dots in the space 25 shows a region in which the velocity vector of the flow velocity is positive. Although illustration is omitted, it has been confirmed that also in the separation device of the comparative example, distribution of velocity vectors of flow velocities in the space 25 is the same as that in FIG. 6.

As the result of the simulations, it has further been found that in the separation device of the comparative example, solid substances passing through the relatively inner region and returning toward the gas inlet 21 may move relatively outward due to centrifugal force in the course of returning toward the gas inlet 21, be carried by the air stream, and move toward the gas outlet 22 again. In short, in the separation device of the comparative example, it has been found that when solid substances are not discharged through the solid substance discharge port 23 before reaching the bottom part 24, the solid substances may reciprocate (vibrate along the axial direction D1) between the gas outlet 22 and the gas inlet 21 in the vicinity of the gas outlet 22, and may stay in the vicinity of the gas outlet 22. The solid substances staying in the vicinity of the gas outlet 22 may be discharged through the gas outlet 22 but not through the solid substance discharge port 23.

In contrast, the separation device 1 includes the separating wall 5 disposed in the space 25. The separating wall 5 separates the space 25 into the first region R1 on the inner side and the second region R2 on the outer side when viewed in the axial direction D1 of the casing 2. The first region R1 on the inner side is a region in which for the velocity vector of the flow velocity of a gas in the space 25, the velocity vector of the flow velocity tends to be negative, where the direction from the gas inlet 21 toward the gas outlet 22 along the axial direction D1 of the casing 2 is defined as the positive direction. In other words, the first region R1 is a region in which the gas flows in a direction from the gas outlet 22 toward the gas inlet 21. The second region R2 on the outer side is a region in which for the velocity vector of the flow velocity of a gas in the space 25, the velocity vector of the flow velocity tends to be positive, where the direction from the gas inlet 21 toward the gas outlet 22 along the axial direction D1 of the casing 2 is defined as the positive direction. In other words, the second region R2 is a region in which the gas flows in a direction from the gas inlet 21 toward the gas outlet 22. In short, for the velocity vector of the flow velocity of a gas in the space 25, a vector obtained by subtracting the velocity vector (the average of velocity vectors) of the flow velocity in the first region R1 from the velocity vector (the average of velocity vectors) of the flow velocity in the second region R2 is positive, where the direction from the gas inlet 21 toward the gas outlet 22 along the axial direction D1 is defined as the positive direction.

In the separation device 1, when solid substances that have not been discharged through the solid substance discharge port 23 before reaching the bottom part 24 return toward the gas inlet 21, the separating wall 5 prevents the solid substances from moving relatively outward in the course of their returning toward the gas inlet 21. That is, when solid substances (particles) passing through the second region R2 and moving toward the gas outlet 22 reach the bottom part 24 and then pass through the first region R1 to return toward the gas inlet 21, the separating wall 5 prevents the solid substances from moving from the first region R1 to the second region R2 in the course of their returning toward the gas inlet 21. This reduces the possibility that the solid substances stay in the vicinity of the gas outlet 22 and reduces the possibility that the solid substances are discharged through the gas outlet 22, thereby improving separative performance of separating solid substances contained in a gas from the gas.

Further, in the separation device 1, the solid substances that have returned to the vicinity of the blades 4 while passing through the first region R1 move, for example, through the gap (first gap) between the separating wall 5 and the blades 4 to the second region R2, and then pass through the second region R2 again to move toward the gas outlet 22. Therefore, these solid substances are more likely to be discharged through the solid substance discharge port 23 in the course of passing through the second region R2 again and moving toward the gas outlet 22. Thus, in the separation device 1, the separative performance of separating solid substances contained in a gas from the gas can be further improved.

As shown in FIG. 2, an outer cover 7 may be optionally attached to the separation device 1. The outer cover 7 has a bottomed cylindrical shape. The outer cover 7 covers the casing 2 at the side of the bottom part 24. Although not shown, the outer cover 7 has an opening, a cut-out, or the like for exposing the outlet tubular part 6. The outer cover 7 prevents particles discharged through the solid substance discharge port 23 from scattering away from the separation device 1.

As shown in FIG. 5, the separation system 10 includes the separation device 1 and the driving device 11 configured to rotationally drive the rotor 3 of the separation device 1. The driving device 11 includes, for example, a motor configured to rotationally drive the rotor 3. The driving device 11 may be configured such that a rotation shaft of the motor is directly or indirectly coupled to the rotor 3 or such that rotation of the rotation shaft of the motor is transmitted to the rotor 3 via a pulley and a rotary belt. The motor may be disposed inside the casing 2 or may be disposed outside the casing 2. The rotational velocity of the rotor 3 rotationally driven by the driving device 11 is, for example, 1500 rpm to 3000 rpm.

The separation system 10 further includes the control device 12 configured to control the driving device 11. The control device 12 includes a computer system. The computer system includes, as principal hardware components, a processor and memory. The processor executes a program stored in the memory of the computer system, thereby implementing functions as the control device 12. The program may be stored in advance in the memory of the computer system. Alternatively, the program may also be downloaded over a telecommunications network or be distributed after having been recorded in some non-transitory storage medium such as a memory card, an optical disc, or a hard disk drive, any of which is readable for the computer system. The processor of the computer system includes one or more electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits include a system LSI, a very large-scale integrated circuit (VLSI), and an ultra large-scale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. The plurality of electronic circuits may be collected on one chip or may be distributed on a plurality of chips. The plurality of chips may be collected in one device or may be distributed in a plurality of devices. As mentioned herein, the computer system includes a microcontroller including one or more processors and one or more memory elements. Thus, the microcontroller is also composed of one or more electronic circuits including a semiconductor integrated circuit or a large-scale integrated circuit.

### (3) Operation of Separation Device and Separation System

In the separation device 1 according to the embodiment, the rotation direction A1 (see FIGS. 3 and 4) of the rotor 3 is, for example, a clockwise direction when the rotor 3 is viewed from the bottom part 24 in the axial direction D1 of the casing 2. The separation system 10 rotationally drives the rotor 3 by the driving device 11.

In the separation device 1, rotation of the rotor 3 provided with the blades 4 enables force to be applied to air flowing in the inside space (flow path) of the casing 2 in a rotation direction around the rotation central axis 30. In the separation device 1, the rotation of the rotor 3 rotates the plurality of blades 4 together with the rotor 3, which results in that the velocity vector of the air flowing through the inside space of the casing 2 has a velocity component in a direction parallel to the rotation central axis 30 and a velocity component in the rotation direction around the rotation central axis 30. In sum, in the separation device 1, rotation of the rotor 3 and each blade 4 generates a swirling airflow in the casing 2. The swirling airflow is a three-dimensional helically rotating airflow.

In the separation device 1, solid substances contained in the air flowing in the casing 2 receive centrifugal force in a direction toward the inner peripheral surface 26 of the casing 2 from the rotation central axis 30 of the rotor 3 while the air helically rotates in the inside space of the casing 2. The solid substances receiving the centrifugal force move toward the inner peripheral surface 26 of the casing 2 and helically rotate along the inner peripheral surface 26 in the vicinity of the inner peripheral surface 26 of the casing 2. Then, in the separation device 1, some of the solid substances in the air are discharged through the solid substance discharge port 23 in the course of passing through the inside space of the casing 2. The centrifugal force that acts on the solid substances is proportional to the mass of the solid substances. Thus, the solid substances having a relatively large mass are likely to reach the vicinity of the inner peripheral surface 26 of the casing 2 earlier than the solid substances having a relatively small mass.

In the separation device 1, the swirling airflow (swirling flow) is generated in the inside space of the casing 2, and therefore, some of the solid substances (e.g., dust) in the air flowing in the casing 2 through the gas inlet 21 of the casing 2 are discharged through the solid substance discharge port 23, and air (purified air) from which the solid substances have been separated (removed) flows out through the gas outlet 22 of the casing 2.

The separation device 1 has the space 25 in the casing 2. Therefore, for example, even when an eddy flow is generated in a gap between two blades 4 adjacent to each other in the rotation direction A1 of the rotor 3 between the outer peripheral surface 37 of the rotor 3 and the inner peripheral surface 26 of the casing 2, the eddy flow is readily rectified into the helical airflow in the space 25 on the downstream side of each blade 4. Particles having a large particle size tend to deviate from the airflow when receiving the centrifugal force, approach the inner peripheral surface 26 of the casing 2, and are easily discharged through the solid substance discharge port 23. In contrast, particles having a small particle size strongly tend to move with the airflow, but in the separation device 1, the airflow is readily rectified into the helical airflow swirling along the inner peripheral surface of the casing 2 in the space 25 on the downstream side of each blade 4, and thus, the particles having a small particle size are also easily discharged through the solid substance discharge port 23.

Moreover, the separation device 1 includes the separating wall 5, and thus, when solid substances passing through the second region R2 and moving toward the gas outlet 22 reaches the bottom part 24, passes through the first region R1, and then returns toward the gas inlet 21, the separating wall 5 prevents the solid substances from moving to the second region R2 in the course of their returning toward the gas inlet 21. This reduces the possibility of solid substances (particles) staying in the vicinity of the gas outlet 22. This can reduce the possibility that the solid substances are discharged through the gas outlet 22, thereby improving the separative performance of separating solid substances contained in a gas from the gas. In addition, particles that have returned to the vicinity of the blade 4 while passing through the first region R1 pass through the second region R2 again and move toward the gas outlet 22, and therefore, the particles are easily discharged through the solid substance discharge port 23 in the course of moving toward the gas outlet 22.

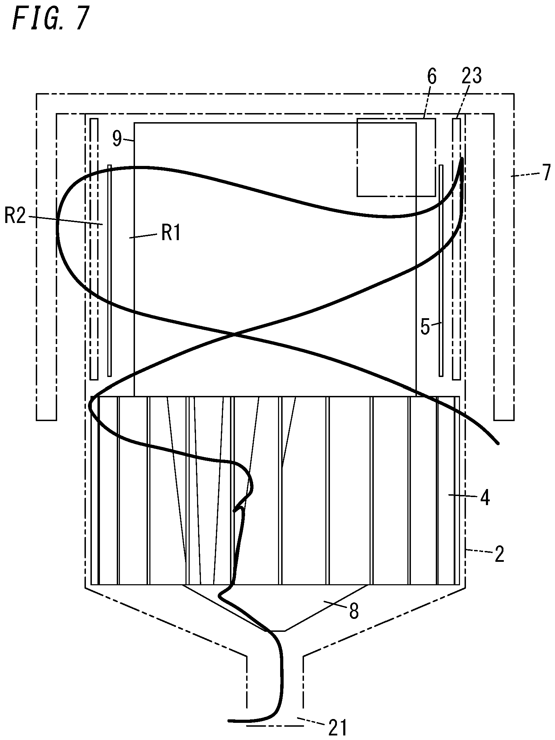

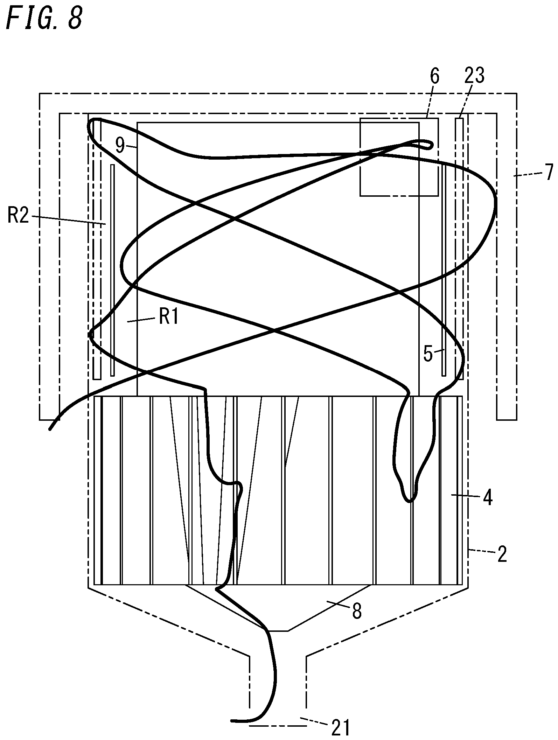

For the separation device 1, the inventors of the present invention simulated, by using software for particle trajectory analysis, the simulation results obtained by using the fluid analysis software. As a method of the particle trajectory analysis, a Discrete Phase Model (DPM) may be adopted. In FIGS. 7 and 8, examples of trajectories of particles in the casing 2 of the separation device 1 according to the embodiment are shown in thick lines. FIG. 7 shows an example of the trajectory of a particle that passes through the second region R2 in the space 25, moves toward the gas outlet 22, and is discharged through the solid substance discharge port 23 without reaching the bottom part 24. FIG. 8 shows an example of the trajectory of a particle that passes through the second region R2 in the space 25, moves toward the gas outlet 22, reaches the bottom part 24, passes through the first region R1, returns toward the gas inlet 21, then passes through the second region R2 again moves toward the gas outlet 22, and is discharged through the solid substance discharge port 23 in the course of moving toward the gas outlet 22. In particular, as shown in FIG. 8, in the separation device 1, the solid substance passing through the second region R2 in the space 25 and moving toward the gas outlet 22 reaches the bottom part 24, passes through the first region R1, returns to the vicinity of the blade 4, and then, in the course of passing through the second region R2 again and moving toward the gas outlet 22, the particle can be discharged through the solid substance discharge port 23.

Regarding separation characteristics of the separation device 1, the separation efficiency tends to increase as the rotational velocity of the rotor 3 increases. Moreover, regarding the separation characteristics of the separation device 1, the separation efficiency tends to increase as the separation particle size increases. In the separation device 1, for example, the rotational velocity of the rotor 3 is preferably set such that fine particles larger than or equal to a prescribed particle size are separated. The fine particles having the prescribed particle size are assumed to be, for example, particles having an aerodynamic diameter of 2 µm. The term "aerodynamic diameter" means the diameter of a particle which is in terms of aerodynamic behavior, equivalent to a spherical particle having a specific gravity of 1.0. The aerodynamic diameter is a particle size obtained from the sedimentation rate of a particle. Examples of the solid substances which are not separated by the separation device 1 and which remain in air include fine particles having a particle size smaller than the particle size of fine particles to be separated by the separation device 1 (in other words, fine particles having a mass smaller than the mass of the fine particles to be separated by the separation device 1).

### (4) Advantages

The separation device 1 according to the embodiment includes the casing 2, the rotor 3, and the blades 4. The casing 2 includes the gas inlet 21, the gas outlet 22, and the solid substance discharge port 23. The rotor 3 is disposed inside the casing 2 and is rotatable around the rotation central axis 30 extending along the axial direction D1 of the casing 2. The blades 4 are disposed between the casing 2 and the rotor 3 and rotate together with the rotor 3. Each blade 4 has the first end 41 adjacent to the gas inlet 21 and the second end 42 adjacent to the gas outlet 22. The casing 2 has the space 25 extending to the solid substance discharge port 23 with respect to the second end 42 of each blade 4 in the axial direction D1 of the casing 2. The separation device 1 further includes the separating wall 5 which separates the space 25 into the first region R1 on the inner side and the second region R2 on the outer side when viewed in the axial direction D1 of the casing 2.

The configuration described above enables the separative performance of the separation device 1 according to the embodiment to be improved.

### (5) Application Example of Separation Device

The separation device 1 is disposed on the upstream side of an air filter such as a high efficiency particulate air filter (HEPA filter) disposed on the upstream side of an air conditioning facility in an air purification system to be installed in, for example, a dwelling house. The "HEPA filter" is an air filter which has particle collection efficiency of higher than or equal to 99.97% of particles having a particle size of 0.3 µm at a rated flow rate and whose initial pressure loss is 245 Pa or less. For the air filter, a particle collection efficiency of 100% is not an essential condition. Providing the separation device 1 to the air purification system enables the air purification system to suppress the fine particles such as dust contained in air from reaching the air filter. Thus, the air purification system enables the life of, for example, an air filter provided on the downstream side of the separation device 1 to be prolonged. For example, the air purification system enables pressure loss to be suppressed from increasing due to an increase in gross mass of, for example, fine particles collected by the air filter. Thus, the air filter in the air purification system may be replaced with a reduced frequency. The configuration of the air purification system is not limited to a configuration in which the air filter and the air conditioning facility are housed in different housings, but the air filter may be provided in the housing of the air conditioning facility. In other words, the air conditioning facility may include an air filter in addition to the air blowing device.

### (6) Variation of Embodiment

The embodiment is a mere example of various embodiments of the present disclosure. Various modifications may be made to the embodiment depending on design and the like as long as the object of the present disclosure is achieved.

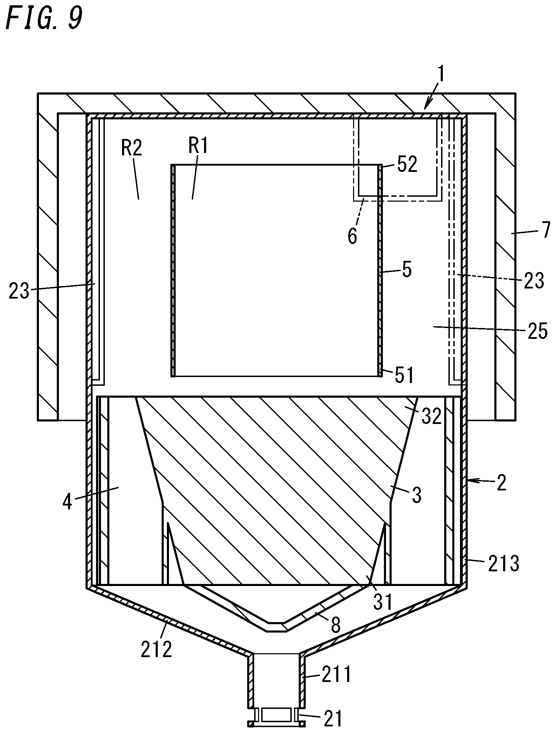

For example, in a first variation of the embodiment, the separation device 1 does not have to include the structure 9 as shown in FIG. 9. In this case, the separating wall 5 may be at a position where the separating wall 5 overlaps the rotor 3 in the axial direction D1 of the casing 2. Of course, even when the separation device 1 is not provided with the structure 9, the separating wall 5 may be at a position where the separating wall 5 overlaps the blades 4 in the axial direction D1 of the casing 2 (see FIG. 2).

In a variation, the shape of the separating wall 5 is not limited to a cylindrical shape but may be a tapered cylindrical shape with the diameter at the side of the first end 51 being smaller than the diameter at the side of the second end 52, or the diameter at the side of the second end 52 being smaller than the diameter at the side of the first end 51.

In a variation, the separation device 1 may include a plurality of separating walls 5. The plurality of separating walls 5 may include two separating walls 5 having the same diameter and coaxially arranged so as not to overlap each other in the axial direction D1, or may include two separating walls 5 having different diameters and coaxially arranged so as to overlap or not to overlap each other in the axial direction D1.

In a variation, the length of the solid substance discharge port 23 (the dimension of the casing 2 along the axial direction D1) may be appropriately adjusted according to the separative performance required for the separation device 1.

In a variation, the solid substance discharge port 23 is not limited to being at a location where the solid substance discharge port 23 does not overlap the blades 4 in the direction orthogonal to the rotation central axis 30 but may be at a location where the solid substance discharge port 23 at least partially overlaps the blades 4 in the direction orthogonal to the rotation central axis 30. In this case, as viewed in the axial direction D1 of the casing 2 (i.e., as viewed in the direction along the rotation central axis 30), the solid substance discharge port 23 does not overlap with any of the plurality of blades 4. In this case, for example, the protruding length of the plurality of blades 4 from the outer peripheral surface 37 of the rotor 3 is determined such that each blade 4 does not collides with the solid substance discharge port 23.

In a variation, the number of the solid substance discharge ports 23 formed in the casings 2 is not limited to two, but the casings 2 may have one solid substance discharge port 23 or may have three or more solid substance discharge ports 23.

In a variation, the plurality of solid substance discharge ports 23 are not limited to having the same shape but may have different shapes.

In a variation, a discharge tubular part extending in a direction in which the solid substance discharge port 23 is open may be formed at the peripheral edge of the solid substance discharge port 23 in the outer peripheral surface 27 of the casing 2.

In a variation, each of the plurality of blades 4 has a tip end adjacent to the casing 2 and a base end adjoining the rotor 3, and the tip end is located frontward of the base end in the rotation direction A1 of the rotor 3 in the protrusion direction from the rotor 3.

In a variation, each of the plurality of blades 4 may have a shape having one or more curved portions in the shape of, for example, an arc.

In a variation, each of the plurality of blades 4 may have a helical shape around the rotation central axis 30 of the rotor 3. Here, "helical" is not limited to a helical shape with one or more turns but includes a shape corresponding to part of the helical shape with one turn.

In a variation, the rotor 3 may have a columnar shape.

In a variation, the rotor 3 may have a bottomed tubular shape having a bottom wall adjacent to the gas inlet 21. When the rotor 3 has the bottomed tubular shape, the rotor 3 preferably includes a reinforcing wall on its inside.

In a variation, the rotor 3 may include a plurality of rotary members. For example, the structure 9 may constitute a part of the rotor 3. In this case, in the rotor 3, for example, the rotary members aligned in a direction along the central axis 29 of the casing 2 are coupled to each other.

In a variation, the structure 9 may have a columnar shape or any other shape such as a truncated cone shape.

In a variation, the structure 9 may be provided with a reinforcing wall therein.

In a variation, the casing 2 may have a plurality of gas outlets 22. In this case, the casing 2 may have a plurality of outlet tubular parts 6. The plurality of outlet tubular parts 6 may be aligned in the outer circumferential direction of the casing 2 or may be located at different locations in the axial direction D1 of the casing 2. Further, as long as the separation device 1 has the gas outlet 22, the separation device 1 does not have to have the outlet tubular part 6.

In a variation, the gas flowing through the gas inlet 21 of the casing 2 into the casing 2 is not limited to air but may be, for example, exhaust gas.

### (7) Aspects

Based on the embodiment, the variations, and the like described above, the following aspects are disclosed.

A separation device (1) of a first aspect includes a casing (2), a rotor (3), and a blade (4). The casing (2) includes a gas inlet (21), a gas outlet (22), and a solid substance discharge port (23). The rotor (3) is disposed inside the casing (2). The rotor (3) is rotatable around a rotation central axis (30) extending along an axial direction (D1) of the casing (2). The blade (4) is disposed between the casing (2) and the rotor (3). The blade (4) is configured to rotate together with the rotor (3). The blade (4) has a first end (41) adjacent to the gas inlet (21) and a second end (42) adjacent to the gas outlet (22). The casing (2) has a space (25) extending to the solid substance discharge port (23) with respect to the second end (42) of the blade (4) in the axial direction (D1). The separation device (1) further includes a separating wall (5). The separating wall (5) separates the space (25) into a first region (R1) on an inner side and a second region (R2) on an outer side when viewed in the axial direction (D1) of the casing (2).

With this aspect, when solid substances (particles) passing through the second region (R2) and moving toward the gas outlet (22) reach the gas outlet (22), pass through the first region (R1), and then return toward the gas inlet (21), the solid substances are prevented from moving to the second region (R2) in the course of returning toward the gas inlet (21). This reduces the possibility of the solid substances staying in the vicinity of the gas outlet (22). This reduces the possibility that the solid substances are discharged through the gas outlet (22), thereby improving the separative performance of separating solid substances contained in a gas from the gas.

In a separation device (1) of a second aspect referring to the first aspect, the separating wall (5) has a tubular shape having an axis along the axial direction (D1) of the casing (2) and having openings on both sides in the axial direction.

This aspect improves the reliability of separation of the first region (R1) and the second region (R2) in the space (25) and improves the separative performance of separating solid substances contained in a gas from the gas.

In a separation device (1) of a third aspect referring to the second aspect, the separating wall (5) has a round tubular shape.

This aspect further improves the reliability of separation of the first region (R1) and the second region (R2) in the space (25) and improves the separative performance of separating solid substances contained in a gas from the gas.

In a separation device (1) of a fourth aspect referring to any one of the first to third aspects, for a velocity vector of a flow velocity of the gas in the space (25), a vector obtained by subtracting a velocity vector of a flow velocity in the first region (R1) from a velocity vector of a flow velocity in the second region (R2) is positive, where a direction from the gas inlet (21) toward the gas outlet (22) along the axial direction (D1) of the casing (2) is defined as a positive direction.

This aspect improves the separative performance of separating solid substances contained in a gas from the gas.

In a separation device (1) of a fifth aspect referring to any one of the first to fourth aspects, the separating wall (5) is disposed at a position where the separating wall (5) overlaps the blade (4) in the axial direction (D1) of the casing (2).

With this aspect, a region in the space (25) which overlaps the blade (4) in the axial direction of the casing (2) is separated into the first region (R1) and the second region (R2).

In a separation device (1) of a sixth aspect referring to any one of the first to fifth aspects, the solid substance discharge port (23) is formed as a slit in an outer peripheral surface of the casing (2), the slit extending along the axial direction (D1).

With this aspect, the solid substances (particles) passing through the second region (R2) and moving toward the gas outlet (22) are easily discharged through the solid substance discharge port (23) in the course of moving toward the gas outlet (22), thereby improving the separative performance of separating solid substances contained in a gas from the gas.

In a separation device (1) of a seventh aspect referring to the sixth aspect, the solid substance discharge port (23) has a part overlapping the gas outlet (22) on one plane orthogonal to the axial direction of the casing (2). The part of the solid substance discharge port (23) is disposed rearward of the gas outlet (22) in a rotation direction (A1) of the rotor (3).

With this aspect, the solid substances (particles) are easily discharged through the solid substance discharge port (23), thereby improving the separative performance of separating solid substances contained in a gas from the gas.

A separation device (1) of an eighth aspect referring to any one of the first to seventh aspects further includes a structure (9) disposed along the rotation central axis (30) of the rotor (3). The structure (9) is at least partially in the space (25).

With this aspect, the space (25) between the structure (9) and the casing (2) is separated into the first region (R1) and the second region (R2).

A separation system (10) of a ninth aspect includes the separation device (1) of any one of the first to eighth aspects, and a driving device (11) configured to rotationally drive the rotor (3).

This aspect improves the separative performance of separating solid substances contained in a gas from the gas.

Note that constituent elements according to the second to eighth aspects are not essential constituent elements for the separation device (1) but may be omitted as appropriate.

### Reference Signs List

- 1: Separation Device
- 2: Casing
- 21: Gas Inlet
- 22: Gas Outlet
- 23: Solid Substance Discharge Port
- 25: Space
- 3: Rotor
- 30: Rotation Central Axis
- 4: Blade
- 41: First End
- 42: Second End
- 5: Separating Wall
- 9: Structure
- 10: Separation System
- 11: Driving Device
- D1: Axial Direction
- R1: First Region
- R2: Second Region

## Claims

1. A separation device (1) comprising:
a casing (2) having a gas inlet (21), a gas outlet (22), and a solid substance discharge port (23);
a rotor (3) disposed inside the casing (2), the rotor (3) being rotatable around a rotation central axis (30) extending along an axial direction (D1) of the casing (2); and
a blade (4) disposed between the casing (2) and the rotor (3), the blade (4) being configured to rotate together with the rotor (3),
the blade (4) having a first end (41) adjacent to the gas inlet (21) and a second end (42) adjacent to the gas outlet (22),
the casing (2) having a space (25) extending to the solid substance discharge port (23) with respect to the second end (42) of the blade (4) in the axial direction (D1),
the separation device (1) further including a separating wall (5) separating the space (25) into a first region (R1) on an inner side and a second region (R2) on an outer side when viewed in the axial direction (D1) of the casing (2),
the solid substance discharge port (23) being formed as a slit in an outer peripheral surface of the casing (2), the slit extending along the axial direction (D1),
**characterized in that**
the solid substance discharge port (23) has a part overlapping the gas outlet (22) on one plane orthogonal to the axial direction (D1), and
the part of the solid substance discharge port (23) is disposed rearward of the gas outlet (22) in a rotation direction (A1) of the rotor (3).

2. The separation device (1) of claim 1, wherein
the separating wall (5) has a tubular shape having an axis along the axial direction (D1) and having openings on both sides in the axial direction (D1).

3. The separation device (1) of claim 2, wherein
the separating wall (5) has a round tubular shape.

4. The separation device (1) of any one of claims 1 to 3, wherein
the separating wall (5) is disposed at a position where the separating wall (5) overlaps the blade (4) in the axial direction (D1).

5. The separation device (1) of any one of claims 1 to 4, further comprising a structure (9) disposed along the rotation central axis (30) of the rotor (3), wherein
the structure (9) is at least partially in the space (25).

6. A separation system comprising:
the separation device (1) of any one of claims 1 to 5; and
a driving device (11) configured to rotationally drive the rotor (3).

## Patentansprüche

1. Trennvorrichtung (1), umfassend:
ein Gehäuse (2) mit einem Gaseinlass (21), einem Gasauslass (22) und einer Feststoffauslassöffnung (23);
einen Rotor (3), der innerhalb des Gehäuses (2) angeordnet ist, wobei der Rotor (3) um eine Rotationsmittelachse (30) drehbar ist, die sich entlang einer axialen Richtung (D1) des Gehäuses (2) erstreckt; und
eine Schaufel (4), die zwischen dem Gehäuse (2) und dem Rotor (3) angeordnet ist, wobei die Schaufel (4) so konfiguriert ist, dass sie sich zusammen mit dem Rotor (3) dreht,
wobei die Schaufel (4) ein erstes Ende (41) in der Nähe des Gaseinlasses (21) und ein zweites Ende (42) in der Nähe des Gasauslasses (22) aufweist,
wobei das Gehäuse (2) einen Raum (25) aufweist, der sich in Bezug auf das zweite Ende (42) der Schaufel (4) in axialer Richtung (D1) bis zur Feststoffauslassöffnung (23) erstreckt,
wobei die Trennvorrichtung (1) ferner eine Trennwand (5) enthält, die den Raum (25) in einen ersten Bereich (R1) auf einer Innenseite und einen zweiten Bereich (R2) auf einer Außenseite trennt, wenn in der axialen Richtung (D1) des Gehäuses (2) betrachtet,
wobei die Feststoffauslassöffnung (23) als ein Schlitz in einer äußeren Umfangsfläche des Gehäuses (2) ausgebildet ist, wobei sich der Schlitz entlang der axialen Richtung (D1) erstreckt,
**dadurch gekennzeichnet, dass**
die Feststoffauslassöffnung (23) einen Teil aufweist, der den Gasauslass (22) in einer Ebene orthogonal zur axialen Richtung (D1) überlappt, und
der Teil der Feststoffauslassöffnung (23) in einer Drehrichtung (A1) des Rotors (3) hinter dem Gasauslass (22) angeordnet ist.

2. Trennvorrichtung (1) nach Anspruch 1, wobei
die Trennwand (5) eine rohrförmige Form mit einer Achse entlang der axialen Richtung (D1) und mit Öffnungen auf beiden Seiten in der axialen Richtung (D1) aufweist.

3. Trennvorrichtung (1) nach Anspruch 2, wobei
die Trennwand (5) eine runde rohrförmige Form aufweist.

4. Trennvorrichtung (1) nach einem der Ansprüche 1 bis 3, wobei
die Trennwand (5) an einer Stelle angeordnet ist, an der die Trennwand (5) die Schaufel (4) in der axialen Richtung (D1) überlappt.

5. Trennvorrichtung (1) nach einem der Ansprüche 1 bis 4, die ferner eine Struktur (9) umfasst, die entlang der Rotationsmittelachse (30) des Rotors (3) angeordnet ist, wobei
sich die Struktur (9) zumindest teilweise in dem Raum (25) befindet.

6. Trennsystem, umfassend:
die Trennvorrichtung (1) nach einem der Ansprüche 1 bis 5; und
eine Antriebsvorrichtung (11), die so konfiguriert ist, dass sie den Rotor (3) in Drehung versetzt.

## Revendications

1. Dispositif de séparation (1) comprenant :
un boîtier (2) ayant une entrée de gaz (21), une sortie de gaz (22), et un orifice de décharge de substance solide (23) ;
un rotor (3) disposé à l'intérieur du boîtier (2), le rotor (3) pouvant tourner autour d'un axe central de rotation (30) s'étendant le long d'une direction axiale (D1) du boîtier (2) ; et
une pale (4) disposée entre le boîtier (2) et le rotor (3), la pale (4) étant configurée pour tourner conjointement avec le rotor (3),
la pale (4) ayant une première extrémité (41) adjacente à l'entrée de gaz (21) et une deuxième extrémité (42) adjacente à la sortie de gaz (22),
le boîtier (2) ayant un espace (25) s'étendant jusqu'à l'orifice de décharge de substance solide (23) par rapport à la deuxième extrémité (42) de la pale (4) dans la direction axiale (D1),
le dispositif de séparation (1) incluant en outre une paroi de séparation (5) séparant l'espace (25) en une première région (R1) sur un côté interne et une deuxième région (R2) sur un côté externe, vu dans la direction axiale (D1) du boîtier (2),
l'orifice de décharge de substance solide (23) étant formé comme une fente dans une surface périphérique externe du boîtier (2), la fente s'étendant le long de la direction axiale (D1),
**caractérisé en ce que**
l'orifice de décharge de substance solide (23) a une partie chevauchant la sortie de gaz (22) sur un plan orthogonal à la direction axiale (D1), et
la partie de l'orifice de décharge de substance solide (23) est disposée à l'arrière de la sortie de gaz (22) dans une direction de rotation (A1) du rotor (3).

2. Dispositif de séparation (1) selon la revendication 1, dans lequel
la paroi de séparation (5) a une forme tubulaire ayant un axe le long de la direction axiale (D1) et ayant des ouvertures sur les deux côtés dans la direction axiale (D1).

3. Dispositif de séparation (1) selon la revendication 2, dans lequel
la paroi de séparation (5) a une forme tubulaire ronde.

4. Dispositif de séparation (1) selon l'une quelconque des revendications 1 à 3, dans lequel
la paroi de séparation (5) est disposée à une position où la paroi de séparation (5) chevauche la pale (4) dans la direction axiale (D1).

5. Dispositif de séparation (1) selon l'une quelconque des revendications 1 à 4, comprenant en outre une structure (9) disposée le long de l'axe central de rotation (30) du rotor (3), dans lequel
la structure (9) est au moins partiellement dans l'espace (25).

6. Système de séparation comprenant :
le dispositif de séparation (1) de l'une quelconque des revendications 1 à 5 ; et
un dispositif d'entraînement (11) configuré pour entraîner en rotation le rotor (3).
